# DEMANDE DE BREVET EUROPEEN

(11) **EP 1 441 526 A1**
(43) Date de publication de la demande: **28.07.2004**
(21) Numéro de dépôt: 04290177.7
(22) Date de dépôt: 23.01.2004
(51) Int. Cl.: H04N 7/173

(54) **Procédé d'enregistrement thématique de contenus numériques à diffusion programmée**

(30) Priorité: 27.01.2003 FR 0300882
(71) Demandeur: FRANCE TELECOM, 75015 Paris (FR)
(72) Inventeur: Bertin, Christian, 35000 Rennes (FR); Campion, Sébastien, 35700 Rennes (FR); Amonou, Isabelle, 35235 Thorigne Fouillard (FR)
(74) Mandataire: Remy, Vincent Noel Paul

(57) **Abrégé**

Ce procédé d'enregistrement de contenus audiovisuels à diffusion programmée, comporte :
- une étape (86) de sélection, à partir d'un terminal d'accès (20), d'un contenu audiovisuel à enregistrer associé à une date et une heure de diffusion ;
- une étape (88) de réception, par le terminal d'accès, d'un fichier d'enregistrement (90) du contenu audiovisuel sélectionné, ce fichier contenant des informations d'identification du contenu audiovisuel et la date et l'heure prévues pour sa diffusion.

Il comporte en outre :
- une étape préalable (80) de sélection, à partir du terminal d'accès, d'un ensemble de contenus ayant un thème commun, ledit ensemble étant proposé par un serveur de présentation (26) de contenus audiovisuels, la sélection du contenu audiovisuel étant alors exécutée automatiquement par le serveur de présentation à partir de l'ensemble sélectionné ; et
- une étape (94) de mise à jour du fichier d'enregistrement, notamment en cas de modification du contenu audiovisuel sélectionné par le serveur de présentation..

## Description

La présente invention concerne un procédé d'enregistrement de contenus audiovisuels à diffusion programmée. Elle concerne également un système d'enregistrement de contenus audiovisuels à diffusion programmée, un serveur de présentation et un terminal d'accès pour la mise en oeuvre d'un tel procédé.

Par diffusion, on entend généralement une diffusion des contenus audiovisuels sur tout type de supports, tels que le satellite, le câble, la transmission hertzienne terrestre ou Internet.

Plus précisément l'invention concerne un procédé du type comportant :
- une étape de sélection, à partir d'un terminal d'accès, d'un contenu audiovisuel à enregistrer associé à une date et une heure de diffusion ;
- une étape de réception, par le terminal d'accès, d'un fichier d'enregistrement du contenu audiovisuel sélectionné, ce fichier contenant des informations d'identification du contenu audiovisuel et la date et l'heure prévues pour sa diffusion.

De tels procédés sont connus.

Par exemple, il est possible de consulter un guide de programmes sur un site Web à partir d'un terminal d'accès connecté au réseau Internet. Ce site facilite en général la recherche et, finalement, avec un peu de navigation et le remplissage de critères de recherche montre toutes les informations disponibles sur le contenu qui intéresse l'utilisateur, notamment des informations d'identification du contenu audiovisuel et la date et l'heure prévues pour sa diffusion. Ces informations peuvent ensuite être téléchargées sur le terminal d'accès.

Il est également prévu de diffuser des contenus audiovisuels associés à des données de description. Le forum DVB (pour « Digital Video Broadcasting ») a spécifié le standard DVB-SI (pour « Service Information ») qui permet de diffuser des informations sur les contenus diffusés. Mais le plus souvent ces informations sont très limitées (Identifiant de la chaîne, Identifiant de l'émission, titre de l'émission, heure de début, heure de fin, contrôle parental...).

Enfin, les spécifications du forum TV Anytime proposent une solution pour l'enregistrement automatique de contenus audiovisuels associés à des données de description de ces contenus. Mais ce forum ne propose pas de solution simple pour sélectionner des contenus audiovisuels déterminés à partir d'un thème intéressant plus particulièrement un utilisateur. L'utilisateur doit dans tous les cas connaître a priori les contenus susceptibles de l'intéresser.

L'invention vise à remédier à ces inconvénients, en fournissant un procédé d'enregistrement de contenus audiovisuels à diffusion programmée capable de traiter des sélections thématiques de contenus audiovisuels, et qui propose une solution peu complexe n'exigeant pas une capacité de traitement trop importante de la part du terminal d'accès.

A cet effet, l'invention a pour objet un procédé du type précité, caractérisé en ce qu'il comporte en outre :
- une étape préalable de sélection, à partir du terminal d'accès, d'un ensemble de contenus ayant un thème commun, ledit ensemble étant proposé par un serveur de présentation de contenus audiovisuels, la sélection du contenu audiovisuel étant alors exécutée automatiquement par le serveur de présentation à partir de l'ensemble sélectionné ; et
- une étape de mise à jour du fichier d'enregistrement, notamment en cas de modification du contenu audiovisuel sélectionné par le serveur de présentation.

Un procédé selon l'invention peut en outre comporter l'une ou plusieurs des caractéristiques suivantes :
- l'étape de mise à jour est exécutée en cas de modification de la date et/ou de l'heure de diffusion du contenu audiovisuel sélectionné ;
- l'étape de mise à jour est exécutée en cas de modification de la sélection d'un contenu audiovisuel par le serveur de présentation ;
- l'étape de mise à jour est exécutée en cas de remplacement du contenu audiovisuel sélectionné par un autre contenu audiovisuel, ou de son annulation ;
- le fichier d'enregistrement comporte au moins un champ repéré par une balise et définissant les informations d'identification du contenu audiovisuel correspondant associées à des données de description de ce contenu ;
- le fichier d'enregistrement comporte au moins un champ repéré par une balise et définissant, pour un contenu audiovisuel donné de ce même fichier, un identifiant de contenu associé à un contenu déjà enregistré dans les moyens de stockage du terminal d'accès ;
- la syntaxe des fichiers échangés entre le terminal d'accès et le serveur est définie par un schéma de structure de données unique, notamment un schéma XML ;
- le serveur de présentation comportant des moyens d'identification d'un terminal ayant sélectionné un contenu audiovisuel, l'étape de mise à jour comporte la notification d'une modification concernant ledit contenu audiovisuel dès que cette modification est notifiée au serveur de présentation ;
- le fichier d'enregistrement comporte l'adresse d'un serveur de mise à jour, pour la génération d'une requête de mise à jour du fichier d'enregistrement émise par le terminal à destination de ce serveur de mise à jour ;
- la requête est une requête du type http ;
- la requête de mise à jour du fichier d'enregistrement est émise périodiquement par le terminal jusqu'à la date et l'heure prévues pour la diffusion du contenu audiovisuel sélectionné ;
- la requête de mise à jour du fichier d'enregistrement est émise par le terminal avec une fréquence de plus en plus élevée lorsque l'on approche de la date et de l'heure de l'enregistrement du contenu audiovisuel sélectionné ; et
- le fichier d'enregistrement comporte un champ repéré par une balise et définissant l'adresse du serveur de mise à jour.

L'invention a également pour objet un système d'enregistrement de contenus audiovisuels à diffusion programmée pour la mise en oeuvre d'un procédé selon l'une quelconque des revendications précédentes, caractérisé en ce qu'il comporte un serveur de présentation de ces contenus audiovisuels et un terminal d'accès muni de moyens de sélection d'un ensemble de contenus ayant un thème commun, ledit ensemble étant proposé par le serveur de présentation, la sélection d'au moins un contenu audiovisuel étant alors exécutée automatiquement par le serveur de présentation à partir de l'ensemble sélectionné pour la fourniture au terminal d'accès d'un fichier d'enregistrement du contenu audiovisuel sélectionné, ce fichier contenant des informations d'identification du contenu audiovisuel et la date et l'heure prévues pour sa diffusion.

L'invention a également pour objet un serveur de mise à jour pour la mise en oeuvre d'un procédé selon l'une quelconque des revendications précédentes, caractérisé en ce qu'il comporte des moyens de sélection d'au moins un contenu audiovisuel et de transmission d'un fichier d'enregistrement du contenu audiovisuel sélectionné, ce fichier contenant des informations d'identification du contenu audiovisuel et la date et l'heure prévues pour sa diffusion, à partir d'une sélection d'un ensemble de contenus ayant un thème commun effectuée depuis le terminal d'accès.

Enfin, l'invention a également pour objet un terminal d'accès pour la mise en oeuvre d'un procédé tel que décrit précédemment.

L'invention sera mieux comprise à la lecture de la description qui va suivre, donnée uniquement à titre d'exemple et faite en se référant aux dessins annexés, dans lesquels :
- la figure 1 illustre schématiquement la structure générale d'un système d'enregistrement selon l'invention ;
- la figure 2 représente une page de présentation de contenus audiovisuels à diffusion programmée pouvant être enregistrés, selon un premier mode de réalisation de l'invention ;
- la figure 3 représente les étapes successives d'un procédé d'enregistrement selon le premier mode de réalisation de l'invention ;
- la figure 4 représente un procédé de mise à jour d'adresse IP de terminal d'accès pour la mise en oeuvre d'un deuxième mode de réalisation de l'invention ;
- la figure 5 représente les étapes successives d'un procédé d'enregistrement, selon le deuxième mode de réalisation de l'invention.

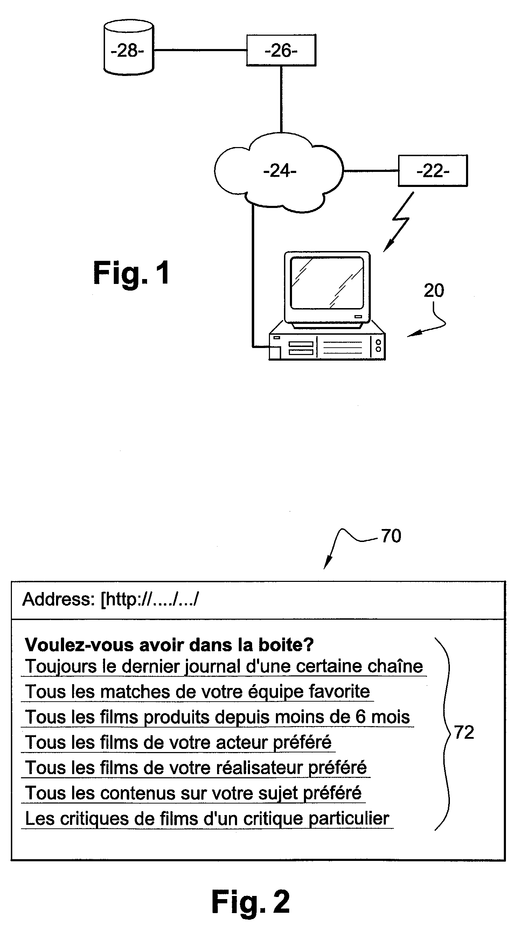

Le système représenté sur la figure 1 comporte un terminal 20 d'accès à des contenus audiovisuels émis par un diffuseur de programmes 22.

Le terminal d'accès 20 et le diffuseur 22 sont en outre connectés à un réseau de transmission d'informations, tel que par exemple le réseau Internet 24, ce qui leur permet d'échanger des informations avec un serveur 26 de présentation des contenus audiovisuels. Le terminal 20 est par ailleurs muni de moyens de stockage de contenus audiovisuels, notamment parmi ceux qui sont diffusés.

Le serveur de présentation 26 met à la disposition des utilisateurs du réseau Internet 24 des pages de présentation des contenus audiovisuels destinés à être diffusés par le diffuseur 22. Ces informations de description des contenus audiovisuels sont contenues dans une base de données 28 reliée au serveur de présentation 26, laquelle est régulièrement mise à jour par le diffuseur 22 via le serveur de présentation 26, lorsque par exemple des contenus audiovisuels sont déprogrammés ou ont une date ou une heure de programmation modifiée.

La page de présentation 70 représentée sur la figure 2 est gérée par le serveur 26 et est consultable par un utilisateur du terminal d'accès 20, à travers le réseau Internet 24. Elle permet la mise en oeuvre d'un premier mode de réalisation de l'invention.

Cette page de présentation 70 comporte une liste 72 de commandes d'enregistrement, chaque commande permettant l'enregistrement d'un ensemble de contenus ayant un thème commun. Par exemple, une telle commande concerne « toujours le dernier journal d'un certaine chaîne », « tous les matches de votre équipe favorite », « tous les films produits depuis moins de six mois », « tous les films avec votre acteur préféré », « tous les films de votre réalisateur préféré », « tous les contenus sur votre sujet préféré », « les critiques de films d'un critique particulier ».

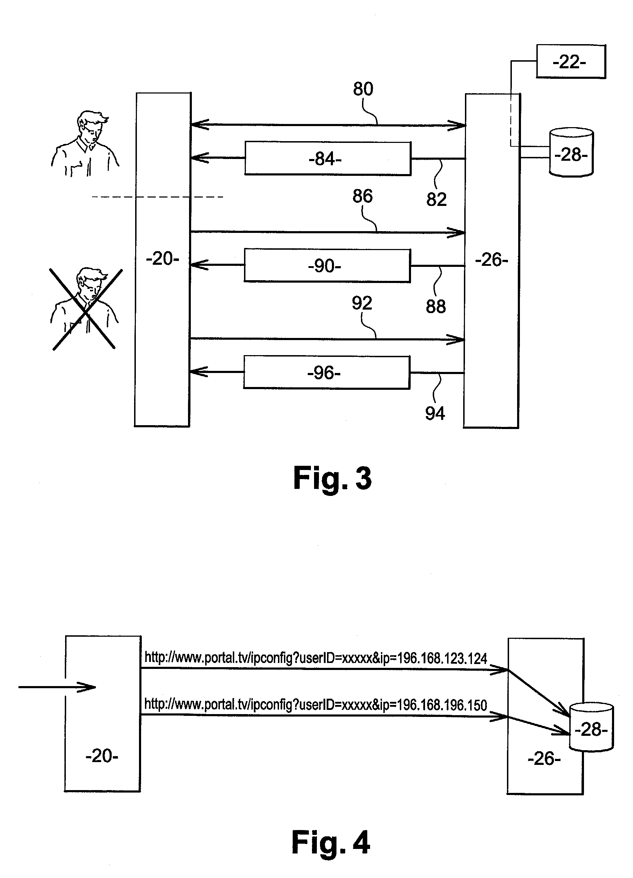

Le procédé de demande d'enregistrement représenté sur la figure 3 comporte une première étape 80 au cours de laquelle l'utilisateur interagit avec la page de présentation 70 puis clique sur l'une des commandes d'enregistrement de la liste 72.

Suite à cette étape, le serveur de présentation 26 récupère les informations associées aux contenus audiovisuels dont le thème correspond à la commande d'enregistrement sélectionnée. Ces informations sont stockées dans la base de données 28.

Il fournit ensuite ces informations au terminal d'accès 20, lors d'une étape 82, sous la forme d'un fichier de demande d'enregistrement 84.

Ce fichier de demande d'enregistrement 84 peut avoir la structure suivante, exprimée selon la syntaxe XML :

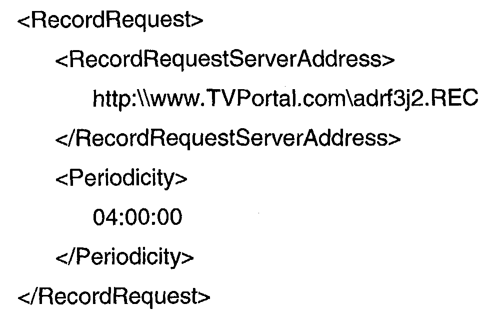

Le fichier de demande d'enregistrement 84 comporte une balise "RecordRequest" de début (<RecordRequest>) et de fin (</RecordRequest>) de fichier. Entre ces deux balises, il comporte des données repérées par des balises de début et de fin, comme cela est prévu selon le standard XML.

Parmi ces données, l'adresse universelle d'un serveur de mise à jour, repérée par une balise "RecordRequestServerAdress", est fournie par le fichier de demande d'enregistrement pour permettre au terminal d'accès 20 d'émettre ensuite des requêtes de demande de mise à jour du fichier de demande d'enregistrement. Dans cet exemple, l'adresse est celle du serveur de présentation 26, qui remplit également une fonction de mise à jour des fichiers de demande d'enregistrement.

Le fichier de demande d'enregistrement 84 comporte en outre de façon optionnelle une information de périodicité repérée par une balise "Periodicity" pour indiquer au terminal d'accès 20 une période d'émission de requêtes de mise à jour. Dans cet exemple, le serveur de présentation 26 demande à être contacté toutes les 4 heures.

Ensuite, lors d'une étape 86 répétée automatiquement de façon périodique selon la périodicité indiquée par le champ "Périodicity", le terminal 20 émet une requête vers le serveur de présentation 26 dont l'adresse figure dans le fichier de demandes d'enregistrement 84. Cette adresse comporte une précision permettant au serveur de présentation 26 de déterminer la commande d'enregistrement qui a été choisie par l'utilisateur.

La requête peut prendre les deux formes suivantes :
http:\\www.TVPortal.com\adrf3j2. REC
ou
http:\\www.TVPortal.com\adrf3j2.REC?MaxRecNb=2.

Comme cela est indiqué dans les deux exemples ci-dessus, la requête de mise à jour comporte de façon optionnelle une variable "MaxRecNb" qui précise le nombre de contenus audiovisuels successifs correspondant au thème commandé, que le terminal d'accès 20 doit enregistrer. Dans un premier cas, si cette variable n'est pas jointe à la requête, la demande d'enregistrement correspond à une demande d'enregistrement du premier contenu audiovisuel correspondant au thème sélectionné. Dans le deuxième cas, la variable "MaxRecNb" est égale à 2, c'est-à-dire que la demande d'enregistrement concerne l'enregistrement de deux contenus audiovisuels successifs correspondant au thème sélectionné.

Suite à cette étape, le serveur de présentation 26 récupère les informations associées à ces contenus audiovisuels sélectionnés dans la base de données 28.

En réponse, lors d'une étape 88, le terminal d'accès 20 reçoit de la part du serveur de présentation 26 un fichier d'enregistrement 90 comportant les contenus audiovisuels correspondant à la demande d'enregistrement thématique émise par l'utilisateur.

Ce fichier d'enregistrement 90 peut avoir la structure suivante, exprimée selon la syntaxe XML :

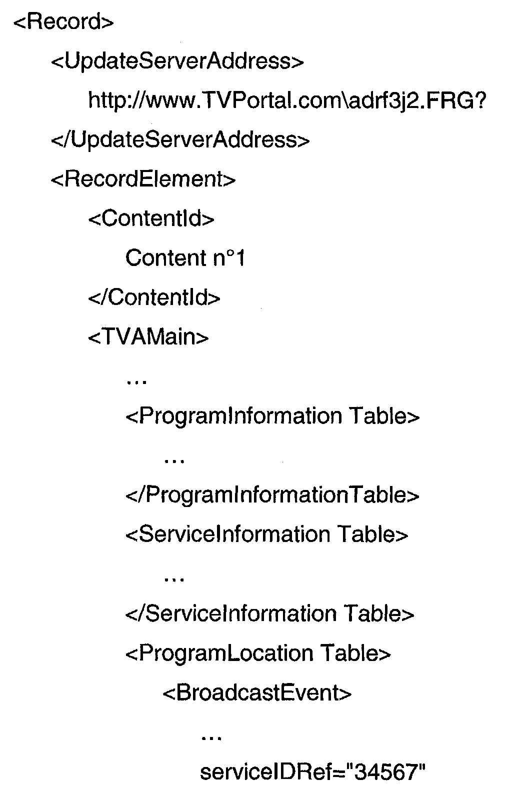

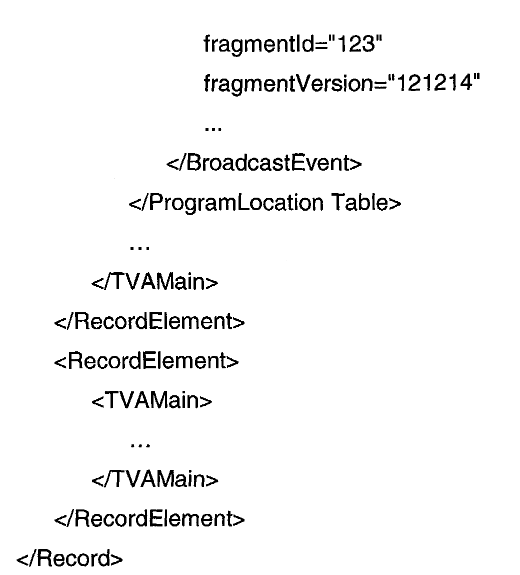

Le fichier d'enregistrement comporte une balise « Record » de début (<Record>) et de fin (</Record>) de fichier. Entre ces deux balises, il comporte des données repérées par des balises de début et de fin, comme cela est prévu selon le format XML.

Parmi ces données, l'adresse universelle d'un serveur de mise à jour, repérée par une balise « UpdateServerAddress », est fournie par le fichier d'enregistrement pour permettre au terminal d'accès d'émettre ensuite des requêtes de demandes de mise à jour, en cas de modification de la date et/ou de l'heure de diffusion, ou d'annulation de la diffusion d'un contenu audiovisuel dont les données de description sont dans le fichier d'enregistrement, ou du remplacement d'un contenu audiovisuel du fichier d'enregistrement par un autre contenu audiovisuel. Dans cet exemple, l'adresse est celle du serveur de présentation 26, qui remplit également une fonction de mise à jour des fichiers d'enregistrement.

Le fichier d'enregistrement 90 comporte en outre des données d'informations relatives à un ou plusieurs contenus audiovisuels sélectionnés lors de l'étape 80. Pour chaque contenu audiovisuel, les données correspondantes sont repérées par une balise « RecordElement ». Dans l'exemple représenté ci-dessus, le fichier d'enregistrement comporte deux contenus audiovisuels sélectionnés. Il comporte donc deux champs repérés par la balise « RecordElement ». De façon plus générale, il peut en comporter un nombre quelconque.

Les données correspondant à un contenu audiovisuel sélectionné comportent de façon optionnelle un identifiant de contenu repéré par la balise « Contentld », si l'utilisateur a choisi d'enregistrer ce contenu audiovisuel à la place d'un autre contenu audiovisuel déjà enregistré dans les moyens de stockage du terminal d'accès 20 et identifié par le même identifiant de contenu.

Enfin, les données correspondant à un contenu audiovisuel comportent une table XML, repérée par une balise « TVAMain » et conforme aux spécifications du forum TV-Anytime. Cette table inclut une sous-table ProgramInformation pour la description du contenu, une sous-table ServiceInformation pour la description du service portant le contenu, et une sous-table ProgramLocation pour la localisation du contenu (en temps et lieu), nécessaire à son enregistrement.

La sous-table ProgramLocation comprend, dans un champs « BroadcastEvent », un identifiant du service portant le contenu, noté « ServiceldRef », un identifiant du contenu, noté « fragmentld », et un identifiant de la version des informations associées au contenu, noté « fragmentVersion ».

De façon optionnelle, le fichier d'enregistrement 90 peut aussi comprendre une référence de l'utilisateur. Dans ce cas, cette référence est repérée par une balise correspondante.

Si l'étape 86 est répétée périodiquement, lors de l'étape 88 suivante, la réponse émise par le serveur de présentation 26 comporte un fichier de mise à jour similaire au fichier de mise à jour 96 qui sera décrit ultérieurement.

Par exemple, si des modifications de date et/ou d'heure de programmation de contenus audiovisuels sont apportées par le diffuseur 22, ceci ayant pour conséquence une modification de la base de données 28, l'émission répétée de requêtes lors de l'étape 86 permet de mettre à jour le fichier 90 d'enregistrement. Notamment, cela permet de modifier les contenus audiovisuels à enregistrer, au cas où un nouveau contenu audiovisuel viendrait à être programmé avant le prochain contenu audiovisuel à programmer dans le thème choisi.

Ensuite, lors d'une étape 92, le terminal 20 génère une requête de mise à jour du fichier d'enregistrement à partir des informations contenues dans ce fichier. Cette requête comprend l'adresse du serveur 26 associée à l'identifiant « fragmentld » et à l'identifiant « fragmentVersion ». Elle prend la forme concaténée suivante :
http://www.TVPortal.com\adrf3j2.FRG?fragmentld=123&fragmentVersion=121214

La requête peut de façon optionnelle, le cas échéant, comprendre également la référence de l'utilisateur à des fins statistiques.

Dès la réception de cette requête, le serveur de présentation et de mise à jour 26 vérifie les informations relatives au contenu correspondant à fragmentld=123 stockées dans la base de données 28 et leur identifiant de version.

Ensuite, lors d'une dernière étape 94, le serveur émet une réponse à cette requête de mise à jour. Cette réponse contient un fichier de mise à jour 96.

Ce fichier de mise à jour 96 peut avoir la structure suivante, exprimée selon la syntaxe XML :

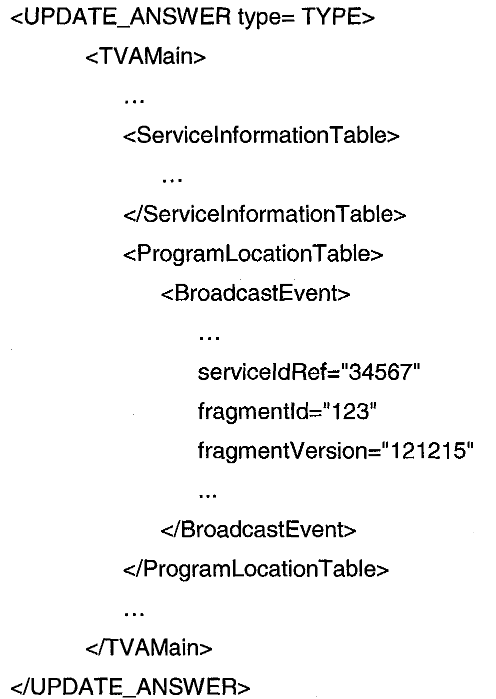

Si l'identifiant de version des données de la base correspond à l'identifiant de version de la requête, cela signifie que les informations associées au contenu audiovisuel à enregistrer n'ont pas changé. Dans ce cas, on identifie le fichier de mise à jour 96 par la valeur TYPE= « Unmodified », indiquant que la diffusion du contenu correspondant n'est pas modifiée.

Si l'identifiant de version des données de la base a une valeur supérieure à l'identifiant de la version de la requête, cela signifie que les informations associées au contenu audiovisuel ont été mises à jour depuis la transmission du fichier d'enregistrement 90. Dans ce cas, on identifie le fichier de mise à jour 96 par la valeur TYPE= « New-version », indiquant que les données de description du contenu correspondant ont été modifiées.

Dès réception de ce fichier, le terminal d'accès remplace la table « TVAMain » correspondante dans le fichier d'enregistrement 90. Notamment, si la date et/ou l'heure d'enregistrement a été modifiée par le diffuseur 22, cette mise à jour permet au terminal d'accès d'en tenir compte pour le démarrage de l'enregistrement.

Au cas ou le contenu sélectionné a été remplacé, par le serveur 26, par un autre contenu audiovisuel, on identifie le fichier de mise à jour 96 par la valeur TYPE= « New-content », indiquant que le contenu audiovisuel à enregistrer est modifié. Dans ce cas, comme dans le précédent, on remplace la table« TVAMain » correspondante dans le fichier d'enregistrement 90.

Au cas où le contenu sélectionné a été supprimé par le serveur 26, on identifie le fichier de mise à jour 96 par la valeur TYPE= « Cancelled », indiquant que le contenu audiovisuel à enregistrer est supprimé. Dans ce cas, l'enregistrement est annulé.

Enfin, au cas où le serveur ne retrouve pas le contenu sélectionné dans la base de données 28, on identifie le fichier de mise à jour 96 par la valeur TYPE= « Unknown », indiquant que le contenu audiovisuel à enregistrer n'a pas été retrouvé. Dans ce cas l'enregistrement est annulé.

Les étapes 92 et 94 sont répétées plusieurs fois, par exemple régulièrement toutes les quatre heures, jusqu'à l'heure d'enregistrement du ou des contenus audiovisuels concernés.

Une alternative consiste à répéter plusieurs fois les étapes 92 et 94 avec une fréquence de plus en plus élevée lorsque l'on approche de la date et de l'heure de l'enregistrement du contenu audiovisuel sélectionné. Bien sûr, cette alternative est adaptée au cas où l'on sélectionne un unique contenu audiovisuel.

Dans les exemples fournis sur la figure 2, si l'utilisateur sélectionne la commande d'enregistrement correspondant à "Toujours le dernier journal d'une certaine chaîne", le fichier de demandes d'enregistrement 84 prend la forme suivante :

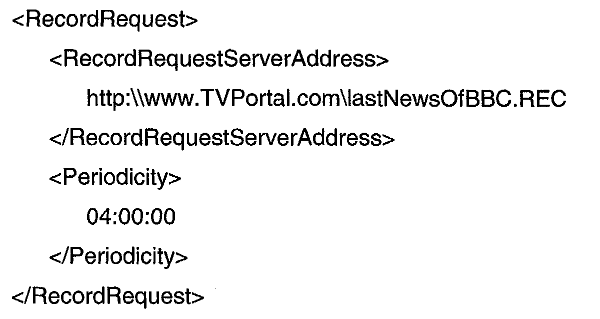

Ce fichier de demande d'enregistrement comporte l'adresse du serveur 26 avec la précision concernant le thème du dernier journal de la chaîne BBC. La périodicité de mise à jour d'un fichier d'enregistrement correspondant est de quatre heures. Le terminal d'accès 20 consulte alors le serveur de présentation :
http:\\www.TVPortal.com\lastNewsOfBBC.REC,
qui lui renvoie le fichier 90 suivant :

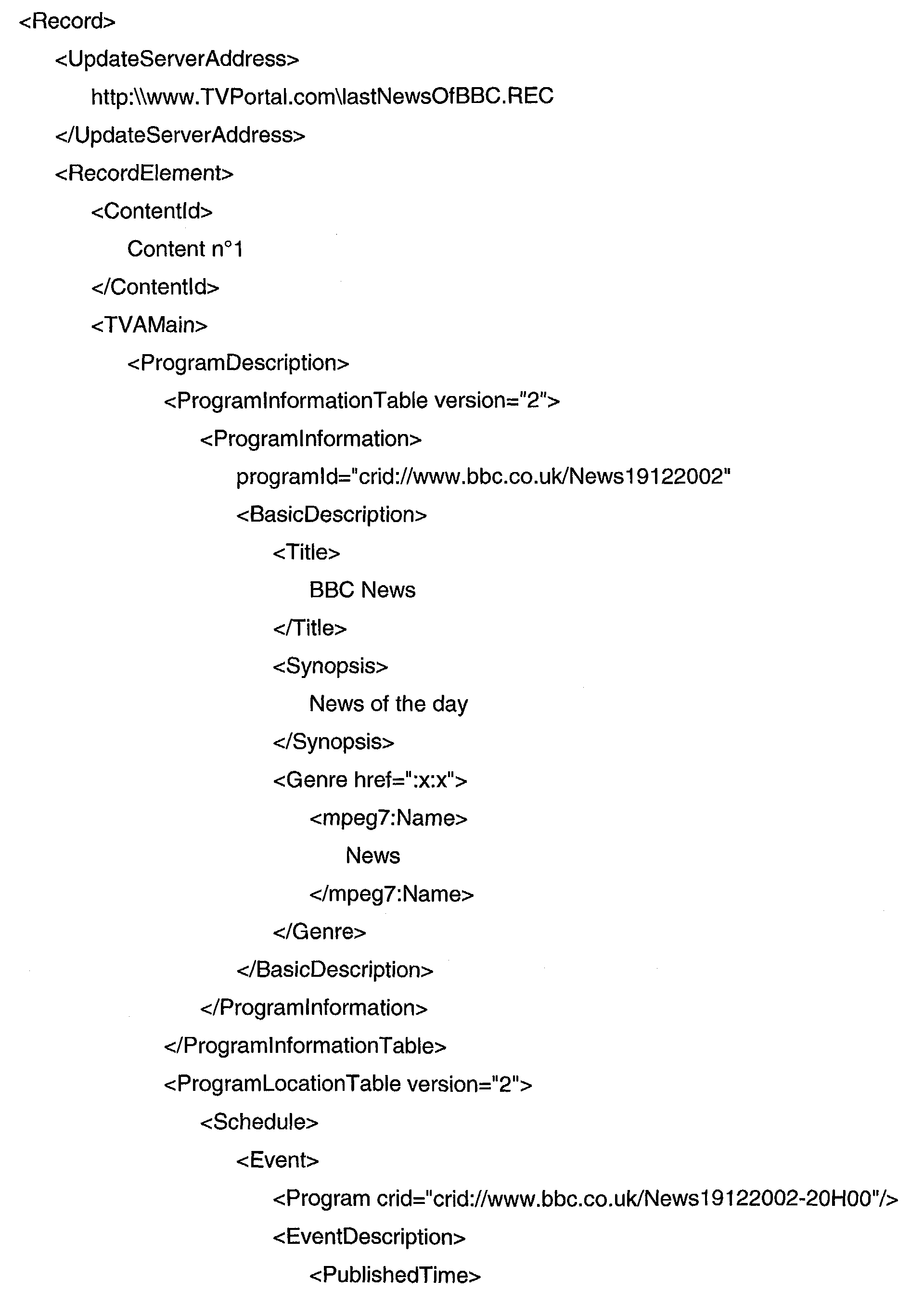

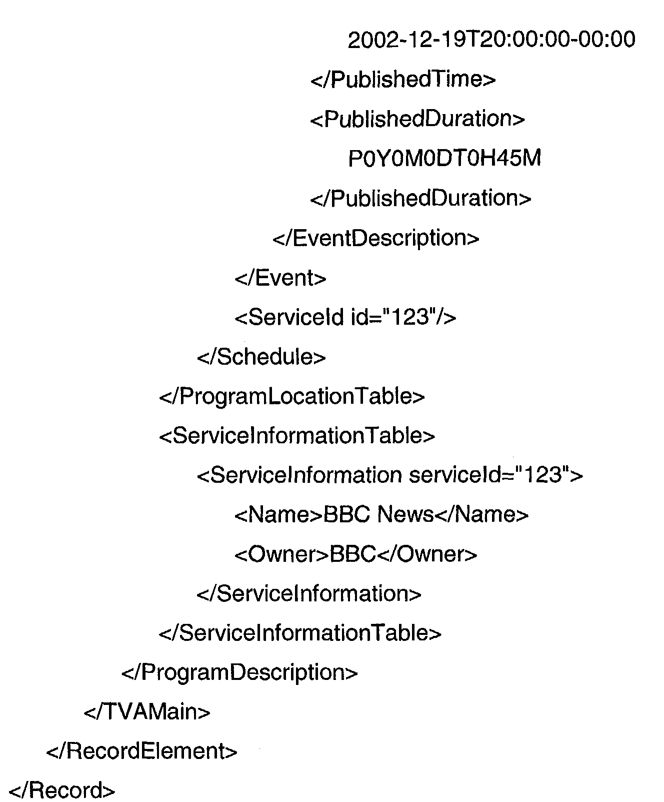

Dès la réception de ce fichier d'enregistrement 90, le terminal d'accès est automatiquement configuré pour enregistrer le ou les contenus audiovisuels correspondants aux dates et heures indiquées dans le fichier.

Au bout de quatre heures, que le terminal ait déjà enregistré un journal ou non, il émet la requête de mise à jour précitée. Si une nouvelle version du fichier d'enregistrement est envoyée par le serveur, il reprogramme un enregistrement. Les étapes 92 et 94 sont alors de nouveau répétées.

Si, comme cela est possible d'après les exemples indiqués sur la figure 4, l'utilisateur sélectionne la commande d'enregistrement « Tous les matches de votre équipe favorite », le serveur de présentation renvoie par exemple le fichier de demande d'enregistrement suivant :

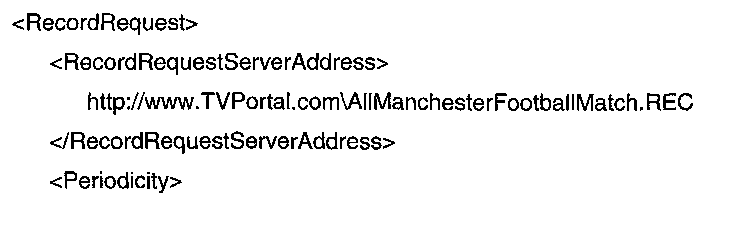

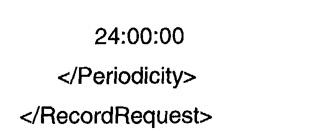

Ce fichier de demande d'enregistrement comporte l'adresse du serveur 26 avec la précision concernant le thème des matches joués par le club de Manchester, si cette équipe est l'équipe favorite de l'utilisateur. La périodicité de mise à jour d'un fichier d'enregistrement correspondant est de vingt-quatre heures.

Ce fichier d'enregistrement peut prendre la forme suivante :

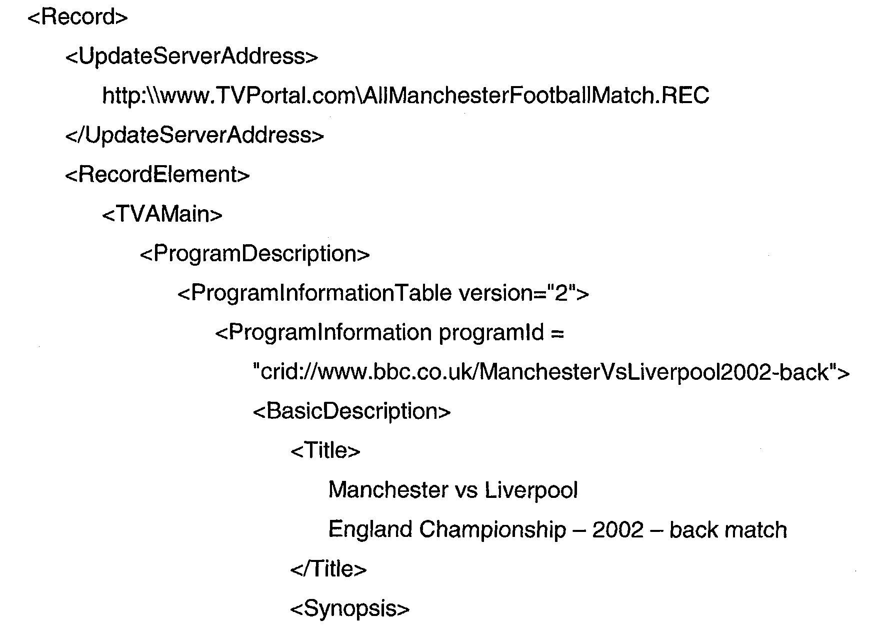

After the first match between Liverpool & Manchester,
where Liverpool win 1-0 the Manchester football club should win to make the final

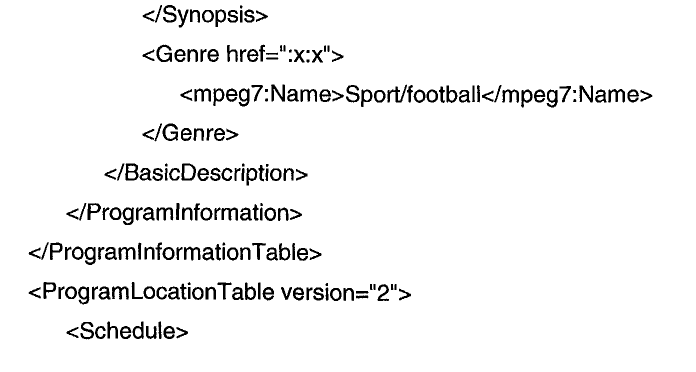

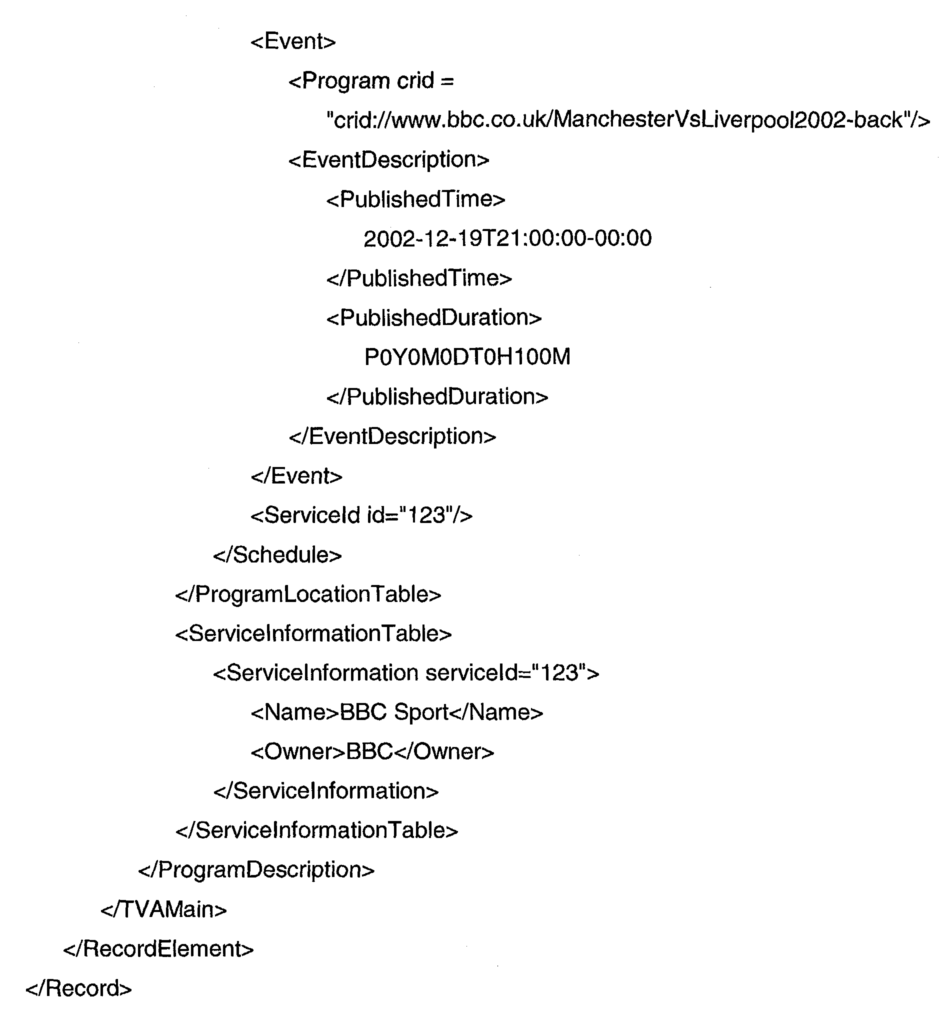

Dès la réception de ce fichier d'enregistrement 90, le terminal d'accès est automatiquement configuré pour enregistrer le ou les contenus audiovisuels correspondant aux dates et heures indiquées dans le fichier.

Au bout de vingt-quatre heures, que le terminal ait déjà enregistré un match ou non, il émet la requête de mise à jour précitée. Si une nouvelle version du fichier d'enregistrement est envoyée par le serveur, il reprogramme un enregistrement. Les étapes 92 et 94 sont alors de nouveau répétées.

Si, comme cela est possible d'après les exemples indiqués sur la figure 4, l'utilisateur sélectionne l'une des commandes d'enregistrement « Tous les films produits depuis moins de 6 mois », « Tous les films de votre acteur préféré », « Tous les films de votre réalisateur préféré », « Tous les contenus sur votre sujet préféré », « Les critiques de films d'un critique particulier », les fichiers retournés par le serveur sont similaires aux deux cas mentionnés précédemment.

Un exemple précis de schéma XML du fichier d'enregistrement 90 est représenté ci-dessous :

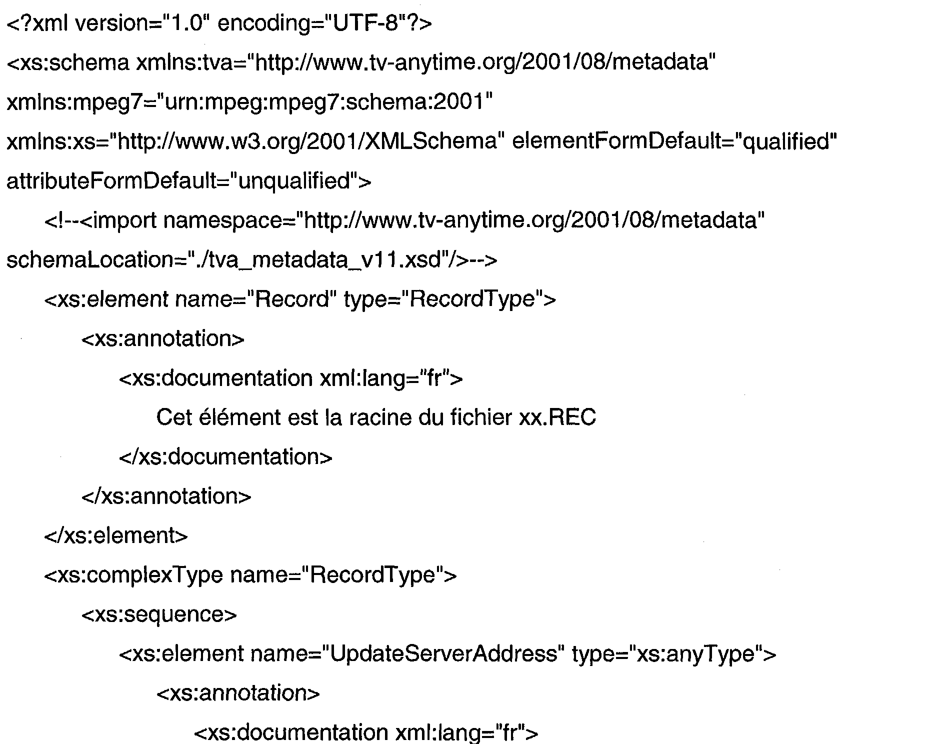

Cette balise contient l'adresse universelle qui servira au terminal pour consulter les éventuels changements qui auront eu lieu pour les émissions prévues en enregistrement

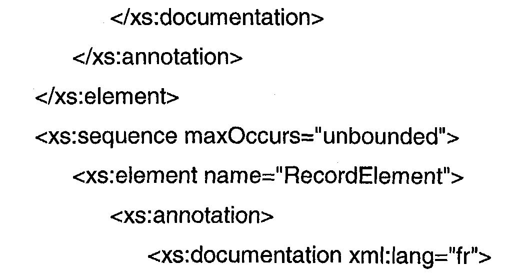

Cet element représente un enregistrement de l'utilisateur, il contient un noeud TVAMain. Ce noeud TVA doit contenir le minimum pour permettre un enregistrement c'est a dire une ProgramlnformationTable, une ServicelnformationTable, une ProgramLocationTable

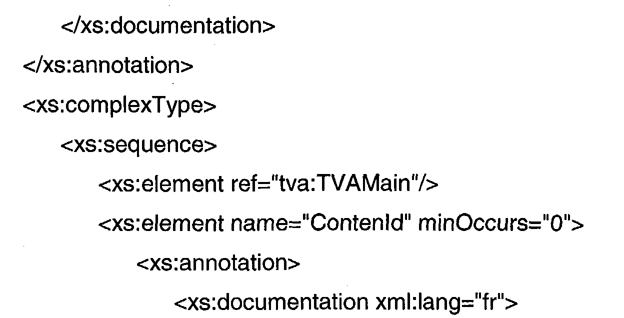

Cet element, s'il est présent indique au terminal qu'il s'agit d'un contenu qui doit remplacer un contenu présent sur son disque portant le même identifiant

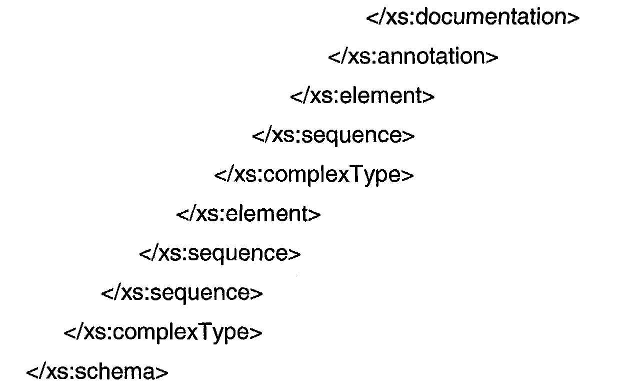

Un exemple précis de schéma XML du fichier de demande d'enregistrement 84 est représenté ci-dessous :

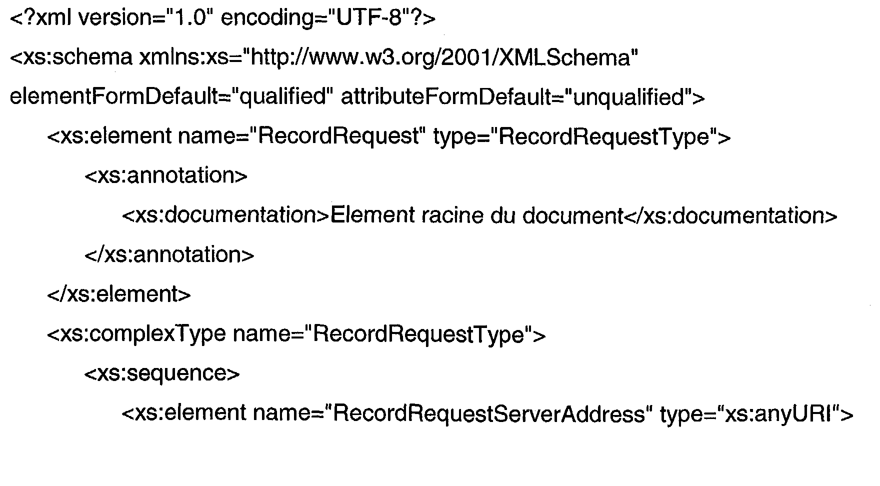

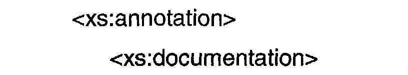

Cet élément contient l'adresse universelle à laquelle le terminal doit se connecter pour obtenir une mise a jour des informations de programmation

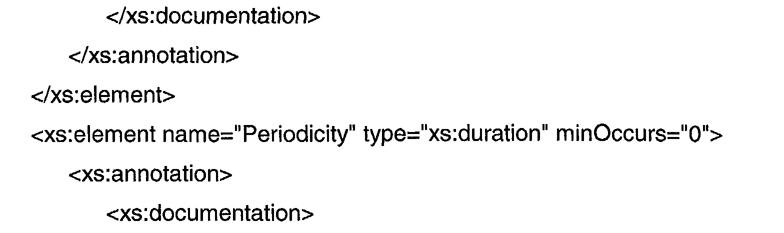

Cet élément contient la période à laquelle doit se référer le terminal pour effectuer ses mises à jour

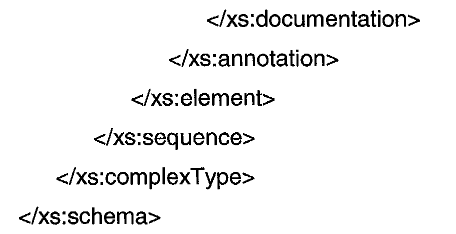

Dans le premier mode de réalisation décrit précédemment, le fichier de demande d'enregistrement 84 et le fichier d'enregistrement 90 comportent l'adresse du serveur de présentation et de mise à jour 26. Ceci permet au terminal d'accès 20 d'émettre de façon simple des requêtes de demande de mise à jour, par exemple selon le format HTTP.

Selon un deuxième mode de réalisation de l'invention, il est possible de faire en sorte que la transmission par le serveur du fichier d'enregistrement 90 et les mises à jours de ce fichier, effectuées sous la forme de transmissions par le serveur 26 de fichiers de mise à jour, soit faite spontanément par le serveur à l'aide de notifications, sans nécessiter l'émission de requêtes par le terminal d'accès 20.

Pour cela, un procédé de mise à jour de l'adresse IP du terminal d'accès est mis en oeuvre dans ce deuxième mode de réalisation.

Comme cela est représenté sur la figure 4, lors d'une première étape 100 de déclaration, le terminal d'accès transmet au serveur de présentation 26 un identifiant qui permet de le reconnaître de façon unique et son adresse IP (pour « Internet Protocol »).

Dès qu'il reçoit ces informations, le serveur de présentation 26 les stocke dans une base de données utilisateurs en établissant un lien entre l'adresse IP et l'identifiant du terminal d'accès 20.

Par la suite, dès que, lors d'une étape 102, on affecte une nouvelle adresse IP au terminal 20, celui-ci en informe le serveur de présentation 26 lors d'une étape suivante 104, à l'aide d'une requête HTTP. Cette nouvelle adresse IP du terminal 20 vient alors remplacer la précédente dans la base de données utilisateurs 28 du serveur de présentation.

En alternative à cette solution, on peut également utiliser toute autre application connue, capable de faire la corrélation entre l'identifiant du terminal d'accès et son adresse IP. On peut par exemple utiliser le système DNS (ex : http://user|D.freeserve.co.uk).

Une fois que l'utilisateur s'est déclaré une première fois, le procédé d'enregistrement selon le second mode de réalisation de l'invention peut être mis en oeuvre par le système de la figure 1.

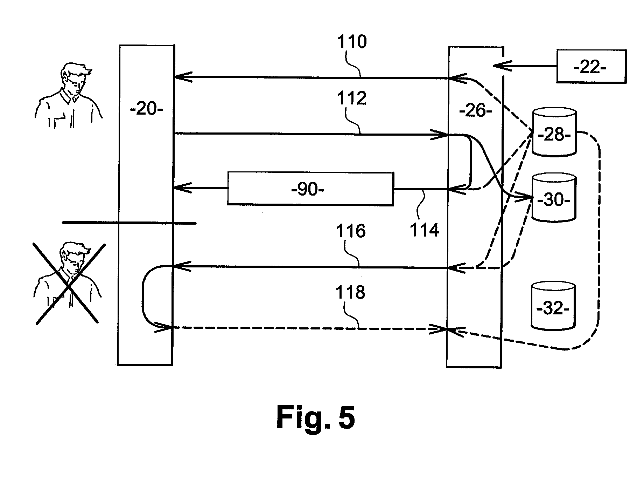

Comme cela est représenté sur la figure 5, lors d'une première étape 110 l'utilisateur interagit avec la page de présentation 70 puis clique sur l'une des commandes d'enregistrement de la liste 72, lors de l'étape suivante 112.

En sélectionnant l'une des commandes d'enregistrement de la liste 72, le terminal d'accès 20 émet une requête vers le serveur de présentation 26 qui extrait de cette requête l'adresse IP du terminal. En consultant la base de données utilisateurs 30 associée à une base de données de liens entre adresses IP et identifiants de terminaux, le serveur de présentation retrouve l'identifiant du terminal qui a émis la requête.

Lors de l'étape suivante, il transmet donc un fichier d'enregistrement 90 au terminal d'accès. Ce fichier d'enregistrement comporte, comme lors de l'étape 88 du premier mode de réalisation, les contenus audiovisuels correspondant à la demande d'enregistrement thématique émise par l'utilisateur. Le fichier d'enregistrement 90 est identique à celui du premier mode de réalisation, si ce n'est que dans ce deuxième mode de réalisation, l'adresse du serveur de présentation 26 est fournie de manière optionnelle.

A un instant quelconque, le serveur 26 reçoit de la part du diffuseur 22 une notification l'informant de la modification de la date et/ou de l'heure de diffusion d'un contenu audiovisuel, de la déprogrammation d'un contenu audiovisuel, ou du remplacement d'un contenu par un autre.

Dès qu'il reçoit cette notification, le serveur de présentation consulte dans la base de données utilisateurs 30 les terminaux d'accès qui ont reçu un fichier d'enregistrement concernant ce contenu audiovisuel. Le terminal 20 est par exemple concerné.

Lors d'une étape 116 de mise à jour suivante, le serveur de présentation émet une requête HTTP vers le terminal 20 concerné par la modification. Dans cette requête, le serveur 26 peut :
- Identifier le contenu audiovisuel concerné par la modification (par les variables fragmentld et fragmentVersion) ;
- Transmettre l'adresse du serveur à contacter pour la mise à jour des informations ;
- Donner des données de correction, si celles-ci sont simples et ne nécessitent pas de contacter le serveur de mise à jour.

En effet, si la modification réside dans un simple décalage de l'heure de diffusion du contenu audiovisuel concerné, ce décalage peut être placé en paramètre dans la requête de mise à jour. Il peut par exemple être exprimé en secondes ou en minutes selon les cas.

S'il il s'agit d'une modification plus importante (par exemple le canal de diffusion ayant également changé) , le serveur peut décider de passer en paramètre une adresse universelle de mise à jour que le terminal devra consulter lors d'une étape facultative 118.

## Revendications

1. Procédé d'enregistrement de contenus audiovisuels à diffusion programmée, comportant :
- une étape (86) de sélection à partir d'un terminal d'accès (20), d'un contenu audiovisuel à enregistrer associé à une date et une heure de diffusion ;
- une étape (81) de réception, par le terminal d'accès, d'un fichier d'enregistrement (90) du contenu audiovisuel sélectionné, ce fichier contenant des informations d'identification du contenu audiovisuel et la date et l'heure prévues pour sa diffusion,
**caractérisé en ce qu'**il comporte en outre :
- une étape préalable de sélection (80), à partir du terminal d'accès, d'un ensemble de contenus ayant un thème commun, ledit ensemble étant proposé par un serveur de présentation (26) de contenus audiovisuels, la sélection du contenu audiovisuel étant alors exécutée automatiquement par le serveur de présentation à partir de l'ensemble sélectionné ; et
- une étape (94) de mise à jour du fichier d'enregistrement, notamment en cas de modification du contenu audiovisuel sélectionné par le serveur de présentation.

2. Procédé d'enregistrement de contenus audiovisuels à diffusion programmée selon la revendication 1, **caractérisé en ce que** l'étape de mise à jour (94) est exécutée en cas de modification de la date et/ou de l'heure de diffusion du contenu audiovisuel sélectionné.

3. Procédé d'enregistrement de contenus audiovisuels à diffusion programmée selon la revendication 1 ou 2, **caractérisé en ce que** l'étape de mise à jour (94) est exécutée en cas de modification de la sélection d'un contenu audiovisuel par le serveur de présentation.

4. Procédé d'enregistrement de contenus audiovisuels à diffusion programmée selon la revendication 1 à 3, **caractérisé en ce que** l'étape de mise à jour (94) est exécutée en cas de remplacement du contenu audiovisuel sélectionné par un autre contenu audiovisuel, ou de son annulation.

5. Procédé d'enregistrement de contenus audiovisuels à diffusion programmée selon l'une quelconque des revendications 1 à 4, **caractérisé en ce que** le fichier d'enregistrement (90) comporte au moins un champ repéré par une balise et définissant les informations d'identification du contenu audiovisuel correspondant associées à des données de description de ce contenu.

6. Procédé d'enregistrement de contenus audiovisuels à diffusion programmée selon l'une quelconque des revendications 1 à 5, **caractérisé en ce que** le fichier d'enregistrement (90) comporte au moins un champ repéré par une balise et définissant, pour un contenu audiovisuel donné de ce même fichier, un identifiant de contenu associé à un contenu déjà enregistré dans les moyens de stockage du terminal d'accès.

7. Procédé d'enregistrement de contenus audiovisuels à diffusion programmée selon l'une quelconque des revendications 1 à 6, **caractérisé en ce que** la syntaxe des fichiers échangés entre le terminal d'accès (20) et le serveur (26) est définie par un schéma de structure de données unique, notamment un schéma XML.

8. Procédé d'enregistrement de contenus audiovisuels à diffusion programmée selon l'une quelconque des revendications 1 à 7, **caractérisé en ce que**, le serveur de présentation (26) comportant des moyens d'identification d'un terminal ayant sélectionné un contenu audiovisuel, l'étape de mise à jour comporte la notification d'une modification concernant ledit contenu audiovisuel dès que cette modification est notifiée au serveur de présentation.

9. Procédé d'enregistrement de contenus audiovisuels à diffusion programmée selon l'une quelconque des revendications 1 à 7, **caractérisé en ce que** le fichier d'enregistrement (90) comporte l'adresse d'un serveur de mise à jour (26), pour la génération d'une requête de mise à jour du fichier d'enregistrement émise par le terminal à destination de ce serveur de mise à jour.

10. Procédé d'enregistrement de contenus audiovisuels à diffusion programmée selon la revendication 9, **caractérisé en ce que** la requête est une requête du type HTTP.

11. Procédé d'enregistrement de contenus audiovisuels à diffusion programmée selon la revendication 9 ou 10, **caractérisé en ce que** la requête de mise à jour du fichier d'enregistrement est émise périodiquement par le terminal (20) jusqu'à la date et l'heure prévues pour la diffusion du contenu audiovisuel sélectionné.

12. Procédé d'enregistrement de contenus audiovisuels à diffusion programmée selon l'une quelconque des revendications 9 à 11, **caractérisé en ce que** la requête de mise à jour du fichier d'enregistrement est émise par le terminal (20) avec une fréquence de plus en plus élevée lorsque l'on approche de la date et de l'heure de l'enregistrement du contenu audiovisuel sélectionné.

13. Procédé d'enregistrement de contenus audiovisuels à diffusion programmée selon l'une quelconque des revendications 9 à 12, **caractérisé en ce que** le fichier d'enregistrement (90) comporte un champ repéré par une balise et définissant l'adresse du serveur de mise à jour.

14. Système d'enregistrement de contenus audiovisuels à diffusion programmée pour la mise en oeuvre d'un procédé selon l'une quelconque des revendications précédentes, **caractérisé en ce qu'**il comporte un serveur de présentation (26) de ces contenus audiovisuels et un terminal d'accès (20) muni de moyens de sélection d'un ensemble de contenus ayant un thème commun, ledit ensemble étant proposé par le serveur de présentation (26), la sélection d'au moins un contenu audiovisuel étant alors exécutée automatiquement par le serveur de présentation à partir de l'ensemble sélectionné pour la fourniture au terminal d'accès d'un fichier d'enregistrement du contenu audiovisuel sélectionné, ce fichier contenant des informations d'identification du contenu audiovisuel et la date et l'heure prévues pour sa diffusion.

15. Serveur de mise à jour (26) pour la mise en oeuvre d'un procédé selon l'une quelconque des revendications 1 à 13, **caractérisé en ce qu'**il comporte des moyens de sélection d'au moins un contenu audiovisuel et de transmission d'un fichier d'enregistrement du contenu audiovisuel sélectionné, ce fichier contenant des informations d'identification du contenu audiovisuel et la date et l'heure prévues pour sa diffusion, à partir d'une sélection d'un ensemble de contenus ayant un thème commun effectuée depuis le terminal d'accès, et des moyens de mise à jour du fichier d'enregistrement, notamment en cas de modification du contenu audiovisuel sélectionné.

16. Terminal d'accès pour la mise en oeuvre d'un procédé selon l'une quelconque des revendications 1 à 13, comportant des moyens de réception d'un fichier d'enregistrement d'un contenu audiovisuel sélectionné, ce fichier contenant des informations d'identification du contenu audiovisuel et la date et l'heure prévues pour sa diffusion, **caractérisé en ce qu'**il comporte en outre des moyens de sélection préalable d'un ensemble de contenus ayant un thème commun, ledit ensemble étant proposé par un serveur de présentation de contenus audiovisuels, la sélection du contenu audiovisuel étant alors exécutée automatiquement par le serveur de présentation à partir de l'ensemble sélectionné, et des moyens de réception de données de mise à jour du fichier d'enregistrement, notamment en cas de modification du contenu audiovisuel sélectionné.
